# FASCICULE DE BREVET EUROPEEN

(11) **EP 2 022 679 B1**
(45) Date de publication et mention de la délivrance du brevet: **14.09.2011**
(21) Numéro de dépôt: 08161182.4
(22) Date de dépôt: 25.07.2008
(51) Int. Cl.: B60R 16/02, B60R 16/03

(54) **Bloc avant ou arrière de véhicule automobile**
Front- oder Heckblock eines Kraftfahrzeugs
Front or rear block of an automobile

(30) Priorité: 01.08.2007 FR 0756869
(43) Date de publication de la demande: 11.02.2009
(73) Titulaire: Faurecia Bloc Avant, 92000 Nanterre (FR)
(72) Inventeur: Aubry, Jean-Marcel, 90140, BOUROGNE (FR)
(74) Mandataire: Domenego, Bertrand

(56) Documents cités:
- EP-A- 0 714 812
- EP-A- 1 055 564
- EP-A- 1 264 738
- DE-A1- 10 141 263
- US-A- 4 122 357

## Description

La présente invention concerne en général les réseaux d'alimentation électrique et/ou de commande des véhicules automobiles.

Plus précisément, l'invention concerne un bloc avant ou arrière de véhicule automobile, selon le préambule de la revendication 1.

US 4,122,357 décrit un bloc avant ou arrière selon le préambule de la revendication 1, comprenant un réseau électrique de véhicule automobile dans lequel les composants situés à l'avant du véhicule sont raccordés par un faisceau à un moyen de connexion unique.

EP-A-0 714 812 décrit un véhicule subdivisé en plusieurs zones. La zone avant comporte deux faisceaux interconnectés par un faisceau intermédiaire. Chaque faisceau est relié électriquement au réseau du véhicule par un connecteur.

L'interface entre la zone avant et le reste du véhicule est complexe, tant pour le montage que pour le fonctionnement du réseau d'alimentation électrique et/ou de commande du véhicule.

Dans ce contexte, l'invention vise à proposer un bloc avant ou arrière dont l'intégration avec le réseau électrique et/ou de commande du véhicule soit plus facile, et dont le fonctionnement de tous les composants électriques soit préservé, même quand le faisceau est coupé en un point.

A cette fin, l'invention porte sur un bloc avant ou arrière selon la revendication 1.

Le bloc peut également présenter une ou plusieurs des caractéristiques ci-dessous, considérées individuellement ou selon toutes les combinaisons techniquement possibles :
- le moyen de connexion est un connecteur électrique comportant un élément mâle relié électriquement à l'un du faisceau du bloc ou du réseau du véhicule et un élément femelle conjugué de l'élément mâle relié électriquement à l'autre du faisceau du bloc ou du réseau du véhicule ;
- le moyen de connexion comprend des moyens de supervision électrique du bloc, aptes, en cas de défaillance de certains des composants électriques du bloc, à identifier parmi les composants électriques du bloc les composants électriques qui sont défaillants et les composants électriques qui sont encore opérationnels ;
- les moyens de supervision électriques comprennent des moyens pour identifier, pour chaque composant électrique défaillant, un type de défaillance ;
- le réseau du véhicule comprend une pluralité d'unités de contrôle électroniques chacune apte à piloter un ou plusieurs des composants électriques du bloc, les moyens de supervision comprenant des moyens pour informer, pour chaque composant électrique défaillant, l'unité de contrôle électronique correspondante du type de défaillance identifié pour ledit composant électrique ;
- les moyens de supervision comprennent des moyens pour sélectivement couper l'alimentation électrique de chaque composant électrique défaillant en fonction au moins du type de défaillance identifié pour ledit composant électrique ;
- les moyens pour couper l'alimentation électrique sont aptes à couper sélectivement l'alimentation électrique de chaque composant électrique défaillant également en fonction d'un paramètre représentatif de l'état du véhicule, ledit paramètre indiquant si le véhicule est en état de rouler ou non ;
- les moyens de connexion comprennent des moyens de conversion analogique/numérique, aptes à convertir un signal numérique reçu du réseau du véhicule en un signal analogique diffusé sur le faisceau du bloc, et aptes à convertir un signal analogique reçu du faisceau du bloc en un signal numérique diffusé sur le réseau du véhicule ; et
- les moyens de connexion comprennent des moyens de multiplexage/démultiplexage, aptes à démultiplexer un signal numérique multiplexé reçu du réseau du véhicule, et à multiplexer le signal numérique diffusé sur le réseau du véhicule.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique, en vue de dessus, de la partie avant d'un véhicule automobile, le bloc avant ne faisant pas partie de l'invention; et
- la figure 2 est une vue similaire à celle de la figure 1, pour un second mode de réalisation de l'invention.

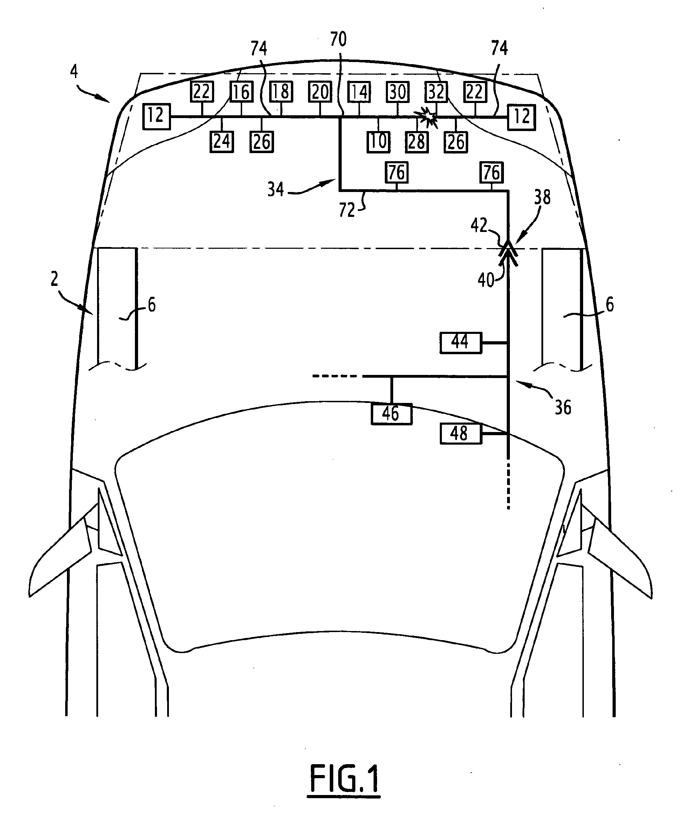

Le véhicule automobile 1 représenté sur la figure 1 comporte, entre autres, une structure rigide porteuse 2 et un bloc avant 4 rapporté d'une pièce sur la structure porteuse 2.

La structure porteuse 2 comprend notamment des longerons 6 s'étendant longitudinalement, l'un à droite et l'autre à gauche du véhicule.

Le bloc avant 4 est rigidement fixé à des extrémités avant des longerons 6. Le bloc avant 4 est symbolisé ici par un trapèze dessiné en trait mixte. Le bloc avant 4 comprend typiquement un cadre rigide (non représenté), et une pluralité d'équipements rigidement fixés sur le cadre. Parmi ces équipements, peuvent figurer notamment le radiateur, le condenseur, des absorbeurs de chocs, une serrure de verrouillage du capot du véhicule, des lave-projecteur, des tuyauteries du véhicule, et un ou plusieurs des composants électriques suivants : un groupe moto-ventilateur 10 apte à créer une convexion forcée d'air au contact du radiateur, les projecteurs avant 12, un ou plusieurs capteurs de place disponible 14, un ou plusieurs capteurs d'aide au stationnement 16, un capteur de température ambiante 18, un radar 20 apte à détecter les obstacles à l'avant du véhicule, des feux antibrouillard 22, un klaxon 24, des volets motorisés 26 déplaçables en vue de gérer la ventilation de l'habitacle du véhicule, une ou plusieurs pompes 28 prévues pour projeter un liquide de nettoyage de la glace extérieure des projecteurs, un capteur de vitesse 30 faisant partie du dispositif de régulation de la vitesse du véhicule (cruise control), des capteurs de coussin gonflable 32, etc .... Le bloc avant comprend également un faisceau 34 d'alimentation électrique et de commande des composants électriques énumérés ci-dessus.

L'ensemble des équipements ci-dessus est généralement monté sur le cadre du bloc avant dans l'atelier du fournisseur du bloc, puis le bloc avant avec les équipements prémontés est rapporté à l'avant du véhicule sur la structure de celui-ci. De même, le faisceau 34 est monté sur le cadre et raccordé aux différents composants électriques dans l'atelier du fournisseur, puis, une fois le bloc avant rapporté sur la structure du véhicule, le faisceau 34 est raccordé au réseau 36 d'alimentation électrique et de commande du véhicule.

A cette fin, le bloc avant 4 comporte des moyens 38 de connexion aptes à relier électriquement le faisceau 34 au réseau 36 en un point de connexion unique.

Les moyens 38 sont constitués d'un connecteur électrique comportant un élément mâle 40 relié électriquement au réseau du véhicule, et un élément femelle 42, conjugué de l'élément mâle 40, relié électriquement au faisceau 34.

Dans la figure 1, l'élément mâle 40 du connecteur comporte plusieurs contacts mâles, chacun relié à un conducteur électrique du réseau 36. Ces conducteurs électriques sont soit des conducteurs d'amenée de puissance, soit des conducteurs de transfert de commande. Les conducteurs d'amenée de puissance sont reliés aux organes 44 générateurs de puissance du véhicule, par exemple à la batterie ou à l'alternateur. Les conducteurs de commande véhiculent des informations analogiques ou numériques de commande des composants électriques du bloc avant. Ils sont reliés aux différentes unités de contrôle électroniques 46, 48 du véhicule.

L'élément femelle 42 comprend plusieurs contacts femelles, chaque contact femelle étant électriquement en contact avec un des contacts mâles quand l'élément mâle est engagé dans l'élément femelle. Chaque contact femelle est par ailleurs connecté électriquement à un conducteur électrique du faisceau 34. Le faisceau 34 comprend une pluralité de conducteurs électriques de puissance, amenant la puissance électrique depuis le connecteur 38 jusqu'aux différents composants électriques. Le faisceau 34 comprend également des conducteurs de commande, transmettant des informations de commande aux composants électriques. Certains composants, comme par exemple le klaxon 24, sont reliés seulement à des conducteurs de puissance. D'autres composants, par exemple le radar 20, sont reliés à la fois à des conducteurs de puissance et à des conducteurs de commande.

Ainsi, chaque conducteur de commande du faisceau 34 est électriquement relié par l'intermédiaire d'un contact mâle et d'un contact femelle à un conducteur de commande du réseau 36. De même, chaque conducteur de puissance du faisceau 34 est relié par l'intermédiaire d'un contact mâle et d'un contact femelle à un conducteur de puissance du réseau 36.

Le raccordement électrique du faisceau 34 au réseau 36 est extrêmement simple. Une fois le bloc avant 4 rapporté sur la structure porteuse du véhicule, il suffit d'engager l'élément mâle 40 du connecteur électrique dans l'élément femelle 42. Une fois la connexion réalisée, chacun des composants électriques 10 à 32 est relié électriquement au réseau du véhicule.

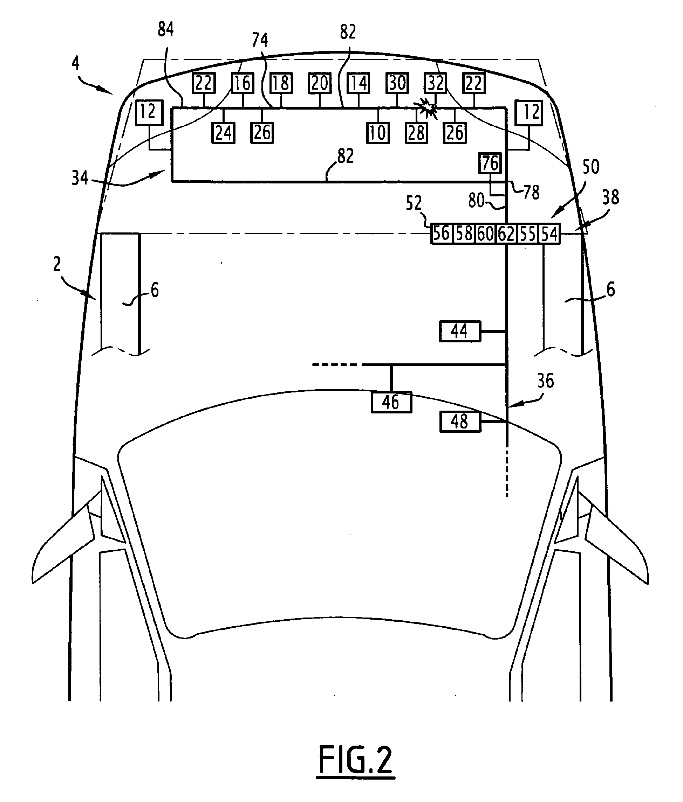

Selon un mode de réalisation, représenté sur la figure 2, le moyen de connexion 38 est un boîtier électronique 50. Le boîtier 50 comporte des moyens 52 de supervision électrique du bloc avant, et, optionnellement, des moyens 54 de conversion analogique/numérique et des moyens 55 de multi-plexage/démultiplexage.

Les moyens de supervision 52 comprennent :
- des moyens 56 pour identifier, parmi tous les composants électriques 10 à 32 du bloc avant, ceux qui sont opérationnels et ceux qui sont défaillants ;
- des moyens 58 pour identifier, pour chaque composant électrique défaillant, un type de défaillance ;
- des moyens 60 pour informer, pour certains composants électriques défaillants, l'unité de contrôle électronique qui gère ledit composant défaillant du type de défaillance identifié ;
- des moyens 62 pour sélectivement couper l'alimentation électrique de chaque composant électrique défaillant, en fonction au moins du type de défaillance identifié pour ledit composant électrique, et d'un paramètre représentatif de l'état du véhicule.

Les moyens 56 identifient les composants défaillants notamment en analysant l'évolution dans le temps de l'intensité et de la tension du courant fourni à chaque composant.

Pour chaque composant électrique, les moyens 58 identifient la défaillance dans une liste prédéterminée. Cette liste peut être commune à tous les composants, ou être spécifique à chaque composant. Elle peut être partiellement commune à tous les composants. Par exemple, la liste peut comprendre les items suivants : composants totalement défaillants, composants partiellement défaillants, court-circuit, surcharge, surtension, etc ....

Comme indiqué plus haut, certains composants électriques du bloc avant sont associés à des unités de contrôle électronique faisant partie du réseau électrique du véhicule 36. On trouve par exemple parmi ces composants le groupe motoventilateur 10, les capteurs de place 14, les capteurs d'aide au stationnement 16, le radar 20, les volets 26, le capteur de vitesse 30, et les capteurs de coussin gonflable 32. Chacun de ces composants communique avec l'unité de contrôle correspondante par l'intermédiaire du réseau 36 et du faisceau 34. L'unité de contrôle électronique gère les composants électriques qui lui sont associés. En fonction des commandes des passagers du véhicule, et des informations disponibles concernant le fonctionnement du véhicule, l'unité de contrôle électronique commande la mise en service, l'arrêt, ou la modification du fonctionnement du composant, selon les circonstances.

Les moyens 60, quand ils détectent qu'un tel composant est défaillant, communiquent à l'unité de contrôle correspondante, l'identité du composant et la nature de la défaillance. En retour, l'unité de contrôle peut renvoyer un ordre concernant cet équipement, ou concernant tout autre composant du bloc avant piloté par ladite unité de contrôle.

Parallèlement à cela, les moyens 62 sont susceptibles de couper l'alimentation électrique de chaque composant électrique défaillant. A cette fin, les moyens 62 reçoivent d'une des unités de contrôle électrique du véhicule un paramètre représentatif de l'état du véhicule, spécialement élaboré dans ce but. Typiquement, ce paramètre indique si le véhicule est en état de rouler ou non. En effet, en cas de choc à l'avant du véhicule, les fonctions à préserver ne sont pas les mêmes selon que le véhicule est apte à rouler ou est immobilisé. Ainsi, si le véhicule est apte à rouler, il est important que les fonctions assurant une bonne visibilité au conducteur (projecteurs) ou contribuant à la sécurité du véhicule (capteurs de coussin gonflable, capteurs de vitesse pour le contrôle automatique de la vitesse du véhicule, ...) soient préservées. Au contraire, d'autres fonctions peuvent être coupées, telles que l'alimentation électrique des pompes pour le nettoyage des glaces des projecteurs, le pilotage des volets d'aération de l'habitacle, ....

Au cas où le véhicule est immobilisé, un nombre plus faible de fonctions doit rester opérationnel, essentiellement les fonctions de signalisation (projecteurs, klaxons, ...).

Ainsi, en fonction du paramètre représentatif de l'état du véhicule, de la liste des composants défaillants, et du type de défaillance identifié pour chaque composant défaillant, les moyens 62 vont couper ou non l'alimentation électrique de chaque composant. Pour cela, les moyens 62 utilisent des arbres de décision prédéterminés.

Dans le mode de réalisation de la figure 2, au moins une partie des composants électriques du bloc avant peut être commandée de manière numérique par les unités de contrôle électroniques qui leur sont associées. Ainsi, le réseau 36 comprend des conducteurs de puissance, des conducteurs de commande dédiés à la transmission d'informations de commande analogiques, et des conducteurs de commande dédiés à la transmission d'informations de commande numériques. Les différents conducteurs de commande sont électriquement reliés au boîtier 50. En revanche, le faisceau 34 ne comprend que des conducteurs de puissance, et des conducteurs de commande analogiques. Au niveau du boîtier 50, les conducteurs de commande analogiques du réseau 36 sont directement reliés aux conducteurs analogiques correspondants du faisceau 34. Les conducteurs de commande numériques du réseau 36 sont reliés aux moyens 54 de conversion numérique/analogique, ces moyens étant aptes à convertir les signaux de commande numériques reçus des conducteurs de commande numériques du réseau 36 en des signaux de commande analogiques diffusés sur les conducteurs de commande analogiques du faisceau 34. Inversement, le boîtier 50 envoie les informations relatives aux composants défaillants vers les unités électroniques de contrôle correspondantes soit sous forme d'informations analogiques, soit sous forme d'informations numériques, selon les cas. Si ces informations sont envoyées sous forme numérique, elles sont converties d'analogique en numérique par les moyens 54.

En variante, les informations numériques échangées entre le boîtier 50 et les différentes unités de contrôle électroniques sont échangées sous forme multiplexées. Dans ce cas, le réseau 36 ne comporte typiquement qu'une seule entrée numérique au niveau du boîtier 50. Le boîtier 50 comporte alors des moyens 55 aptes à démultiplexer le signal numérique multiplexé reçu du réseau 36, et à multiplexer le signal numérique diffusé sur le réseau du véhicule par le boîtier 50.

Dans tous les cas, les informations de commande sont transmises à partir du boîtier 50 vers les différents composants électriques du bloc avant sous forme analogique via le faisceau 34.

Le faisceau 34 peut présenter différentes architectures.

Dans une première architecture non préférée, qui n'est pas représentée sur les figures 1 et 2, le faisceau 34 ne comporte qu'une seule branche. Tous les composants électriques sont raccordés successivement, les uns après les autres, sur le faisceau 34 à partir des moyens de connexion 38. Avec une telle architecture, si le faisceau est coupé en un point, tous les équipements situés en aval de la coupure ne sont plus alimentés. On entend ici par être situés en aval, le fait d'être situés, le long du faisceau, plus loin des moyens de connexion 38 que la coupure.

Le faisceau 34 peut également présenter une architecture dite en T, représentée sur la figure 1. Le faisceau 34 comporte un noeud 70, un tronc commun 72 reliant le noeud 70 aux moyens de connexion 38, et deux branches 74 s'étendant à partir du noeud 70. Certains composants électriques sont reliés à l'une des branches 74, d'autres composants étant reliés électriquement à l'autre branche 74. En variante, certains composants 76 peuvent être reliés électriquement au tronc commun 72, entre le noeud 70 et les moyens de connexion 38. Ainsi, s'il se produit une coupure du faisceau (matérialisée par un symbole étoilé sur la figure 1) sur l'une des branches 74, les composants électriques raccordés à l'autre branche 74 restent opérationnels. De même, des composants électriques situés sur la branche coupée, en amont de la coupure, c'est-à-dire entre le noeud 70 et le point de coupure, restent également opérationnels.

Selon l'invention représentée sur la figure 2, le faisceau 34 présente une architecture en boucle. Dans cette architecture, le faisceau possède un noeud 78, un tronc commun 80 reliant le noeud 78 aux moyens de connexion 38, deux branches 82 s'étendant à partir du noeud 78, les deux branches 82 étant connectées l'une à l'autre par un second noeud 84. Ainsi, les deux branches 82 forment une boucle passant par les noeuds 78 et 84. Au moins certains des composants électriques sont reliés électriquement au noeud 78 à travers les deux branches 82 à la fois. De préférence, tous les composants électriques sont reliés au noeud 78 à travers les deux branches 82. Avec cette architecture en boucle, quand il se produit une coupure du faisceau électrique au niveau d'une des branches 82, tous les composants électriques restent opérationnels. En effet, les composants électriques situés en amont de la coupure sur la branche coupée 82 restent reliés aux moyens de connexion 38 par ladite branche coupée 82. Les composants électriques situés en aval de la coupure sur la branche coupée 82 sont connectés électriquement à l'autre branche 82 via le noeud 84, et sont donc reliés électriquement aux moyens de connexion 38 par la branche 82 non coupée.

Le bloc avant ou arrière décrit ci-dessus présente de multiples avantages.

Du fait qu'il comporte un unique moyen de connexion apte à relier électriquement le faisceau du bloc au réseau du véhicule, tous les composants électriques du bloc étant électriquement reliés aux moyens de connexion par l'intermédiaire du faisceau, le montage du bloc sur le véhicule est considérablement simplifié. Après avoir rapporté le bloc sur la structure porteuse du véhicule, il suffit de connecter le faisceau au réseau du véhicule par le moyen de connexion unique.

Le moyen de connexion peut avantageusement être un connecteur électrique, auquel cas il suffit d'engager l'élément mâle du connecteur dans l'élément femelle conjugué pour réaliser la connexion. La connexion est donc particulièrement simple et rapide.

Les moyens de connexion peuvent également comprendre un boîtier électronique assurant la supervision électrique des composants du bloc. Ceci permet de simplifier considérablement l'architecture électrique du véhicule. Ce boîtier peut comprendre notamment des moyens pour identifier les composants défaillants, des moyens pour identifier le type de défaillance desdits composants défaillants, et des moyens pour informer l'unité de contrôle électronique correspondante de la défaillance du composant et de la nature de la défaillance. Ces fonctions, dans l'état de la technique, étaient réparties entre les différentes unités de contrôle électronique du véhicule. Le fait de les rassembler au niveau du boîtier 50 permet de simplifier l'architecture électrique du véhicule.

Par ailleurs, le boîtier 50 peut également comprendre des moyens pour couper l'alimentation électrique des composants défaillants, en fonction de la nature de la défaillance et en fonction de l'état du véhicule. Ainsi, selon que le véhicule est en état de rouler ou non, certaines fonctions sont préservées ou non. Ceci permet de mettre à l'arrêt des composants électriques dont le fonctionnement pourrait créer des situations dangereuses, et qui ne sont pas indispensables compte tenu de l'état du véhicule. La sûreté de fonctionnement du véhicule en est améliorée.

De manière avantageuse, le boîtier 50 peut servir à loger des moyens de conversion analogiques/numériques de manière à convertir des signaux de commande numériques reçus des différentes unités de contrôle électronique du véhicule en signaux de commande analogiques reliés vers les composants électriques du bloc. Ceci permet de simplifier encore l'architecture électrique du véhicule.

De manière à limiter le nombre de conducteurs du réseau électrique du véhicule, le boîtier 50 peut comporter des moyens de multiplexage/démultiplexage aptes à démultiplexer les signaux reçus du réseau du véhicule, ou à multiplexer les signaux diffusés vers le réseau du véhicule.

Le faisceau peut avantageusement présenter une architecture en T, ce qui permet, en cas de coupure du faisceau dans l'une des branches du T, de préserver intégralement le fonctionnement des composants raccordés électriquement à l'autre branche du T.

L'architecture en boucle, quant à elle, permet de préserver le fonctionnement de tous les composants électriques, même quand le faisceau est coupé en un point.

Le bloc décrit ci-dessus peut présenter de multiples variantes.

L'invention a été décrite relativement à un bloc avant susceptible d'être rapporté à l'avant du véhicule. Elle est toutefois applicable également à un bloc arrière, susceptible d'être rapporté d'une pièce à l'arrière du véhicule. Le bloc arrière correspond typiquement au pare-chocs arrière du véhicule. II porte des composants électriques tels que l'éclairage de la plaque d'immatriculation arrière ou un radar d'aide au stationnement. II peut également comporter des organes de gestion de l'échappement du véhicule automobile. Le bloc arrière est typiquement rapporté sur les extrémités arrière des longerons du véhicule.

Dans le mode de réalisation où le faisceau présente une architecture en T, le faisceau peut comprendre plus de deux branches, par exemple trois, quatre, ou même plus de quatre branches. Toutes les branches peuvent être raccordées au même noeud. En variante, les branches peuvent être raccordées à différents noeuds répartis le long du tronc commun du faisceau. En variante également, chaque branche peut se subdiviser en plusieurs sous-branches, s'étendant à partir d'un ou plusieurs noeuds répartis le long de ladite branche.

Dans le cas où le faisceau présente une architecture en boucle, le faisceau peut comporter plusieurs boucles s'étendant à partir d'un même noeud, ou s'étendant à partir de plusieurs noeuds répartis le long du tronc commun. Certaines boucles peuvent également être reliées à des noeuds disposés dans une autre boucle. Le faisceau peut en outre comporter une ou plusieurs branches s'étendant à partir de noeuds situés soit dans le tronc commun soit dans une ou plusieurs boucles.

Dans le cas où les moyens de connexion du faisceau au réseau du véhicule sont un connecteur, l'élément mâle peut être relié au faisceau et l'élément femelle au réseau du véhicule.

La gestion de la diversité des équipements des blocs avant et arrière selon les versions d'un même modèle de véhicules est facilitée. En effet, les versions d'entrée de gamme et de haut de gamme ne reçoivent pas les mêmes équipements. Le bloc avant décrit ci-dessus, dans le mode de réalisation comportant un boîtier électronique 50 de connexion du faisceau sur le réseau du véhicule, permet d'utiliser le même réseau d'alimentation électrique et de commande pour toutes les versions du véhicule. En revanche, le boîtier 50, le faisceau et les composants électriques du bloc avant varient d'une version à une autre. Les logiciels chargés dans les différentes unités de commande électroniques du véhicule peuvent être différents selon les versions.

Il est par ailleurs possible de faire évoluer facilement les équipements du bloc avant ou arrière au cours de la vie du véhicule, sans modifier l'architecture du réseau d'alimentation électrique et de commande du véhicule. On entend ici par évolution le fait d'ajouter un composant, de le retirer, de le remplacer par un modèle différent, de le remplacer par type de composant différent, etc. A cette fin, le boîtier électronique 50 peut présenter, côté faisceau du bloc, une ou plusieurs entrées en attente. Comme précédemment, il peut être nécessaire de modifier les logiciels chargés dans les unités de contrôle électroniques du véhicule, sans modifier le réseau lui-même.

## Revendications

1. Bloc avant (4) ou arrière de véhicule automobile, le véhicule comprenant une structure rigide (2) et un réseau (36) d'alimentation électrique et/ou de commande, le bloc (4) étant susceptible d'être rapporté sur ladite structure rigide (2) à l'avant ou à l'arrière du véhicule, le bloc (4) comprenant un ensemble de composants électriques (10 à 32), un faisceau (34) d'alimentation électrique et/ou de commande des composants électriques (10 à 32), et au moins un moyen (38) de connexion apte à relier électriquement le faisceau (34) du bloc (4) au réseau (36) du véhicule, le bloc (4) comportant un unique moyen (38) de connexion apte à relier électriquement le faisceau (34) du bloc (4) au réseau (36) du véhicule, tous les composants électriques (10 à 32) du bloc (4) étant électriquement reliés au moyen de connexion (38) par l'intermédiaire du faisceau (34),
**caractérisé en ce que** le faisceau (34) du bloc (4) comprend au moins un noeud (70, 78) relié électriquement au moyen (38) de connexion au réseau (36) du véhicule et deux branches (84, 82) distinctes s'étendant à partir du noeud (70, 78), une partie des composants électriques (10 à 32) étant reliés électriquement à l'une des branches (74, 82) et une autre partie des composants électriques (10 à 32) étant reliés électriquement à l'autre des branches (74, 82), et
**en ce que** les deux branches (82) du faisceau électrique sont connectées électriquement l'une à l'autre en un second point (84) distinct du noeud (78) et forment une boucle, au moins certains des composants électriques (10 à 32) étant reliés électriquement au noeud (78) par les deux branches (82).

2. Bloc avant ou arrière selon la revendication 1, **caractérisé en ce que** le moyen (38) de connexion est un connecteur électrique comportant un élément mâle (40) relié électriquement à l'un du faisceau (34) du bloc (4) ou du réseau (36) du véhicule et un élément femelle (42) conjugué de l'élément mâle (40) relié électriquement à l'autre du faisceau (34) du bloc (4) ou du réseau (36) du véhicule.

3. Bloc avant ou arrière selon la revendication 1, **caractérisé en ce que** le moyen de connexion (38) comprend des moyens (52) de supervision électrique du bloc (4), aptes, en cas de défaillance de certains des composants électriques (10 à 32) du bloc (4), à identifier parmi les composants électriques (10 à 32) du bloc (4) les composants électriques (10 à 32) qui sont défaillants et les composants électriques (10 à 32) qui sont encore opérationnels.

4. Bloc avant ou arrière selon la revendication 3, **caractérisé en ce que** les moyens (52) de supervision électriques comprennent des moyens (58) pour identifier, pour chaque composant électrique (10 à 32) défaillant, un type de défaillance.

5. Bloc avant ou arrière selon la revendication 4, **caractérisé en ce que** le réseau (36) du véhicule comprend une pluralité d'unités de contrôle électroniques (46, 48) chacune apte à piloter un ou plusieurs des composants électriques (10 à 32) du bloc (4), les moyens de supervision (52) comprenant des moyens (60) pour informer, pour chaque composant électrique (10 à 32) défaillant, l'unité de contrôle électronique (46, 48) correspondante du type de défaillance identifié pour ledit composant électrique (10 à 32).

6. Bloc avant ou arrière selon la revendication 5 ou 6, **caractérisé en ce que** les moyens de supervision (52) comprennent des moyens (62) pour sélectivement couper l'alimentation électrique de chaque composant électrique (10 à 32) défaillant en fonction au moins du type de défaillance identifié pour ledit composant électrique (10 à 32).

7. Bloc avant ou arrière selon la revendication 6, **caractérisé en ce que** les moyens (62) pour couper l'alimentation électrique sont aptes à couper sélectivement l'alimentation électrique de chaque composant électrique (10 à 32) défaillant également en fonction d'un paramètre représentatif de l'état du véhicule, ledit paramètre indiquant si le véhicule est en état de rouler ou non.

8. Bloc avant ou arrière selon l'une quelconque des revendications 3 à 7, **caractérisé en ce que** les moyens de connexion (38) comprennent des moyens (54) de conversion analogique/numérique, aptes à convertir un signal numérique reçu du réseau (36) du véhicule en un signal analogique diffusé sur le faisceau (34) du bloc (4), et aptes à convertir un signal analogique reçu du faisceau (34) du bloc (4) en un signal numérique diffusé sur le réseau (36) du véhicule.

9. Bloc avant ou arrière selon la revendication 8, **caractérisé en ce que** les moyens de connexion (38) comprennent des moyens (55) de multiplexage/démultiplexage, aptes à démultiplexer un signal numérique multiplexé reçu du réseau (36) du véhicule, et à multiplexer le signal numérique diffusé sur le réseau (36) du véhicule.

10. Bloc avant ou arrière selon l'une quelconque des revendications précédentes, **caractérisé en ce que** le bloc (4) est un bloc avant.

11. Bloc avant ou arrière selon la revendication 10, **caractérisé en ce que** le bloc (4) comprend un cadre rigide et au moins un radiateur rigidement fixé sur le cadre.

12. Bloc avant ou arrière selon l'une quelconque des revendications précédentes, **caractérisé en ce que** le faisceau (34) est un faisceau d'alimentation électrique et de commande des composants électriques du bloc (4).

## Claims

1. Front (4) or rear end for a motor vehicle, the vehicle comprising a rigid structure (2) and a network (36) for electrical supply and/or control, the end (4) being arranged to be attached to said rigid structure (2) at the front or rear of the vehicle, the end (4) comprising a set of electrical components (10 to 32), a wiring harness (34) for electrical supply and/or control of the electrical components (10 to 32) and at least one connection means (38) arranged to electrically connect the wiring harness (34) of the end (4) to the vehicle network (36), the end (4) having a single connection means (38) arranged to electrically connect the wiring harness (34) of the end (4) to the vehicle network (36), all the electrical components (10 to 32) of the end (4) being electrically connected to the connection means (38) by way of the wiring harness (34),
**characterised in that** the wiring harness (34) of the end (4) comprises at least one node (70, 78) electrically connected to the means (38) for connection to the vehicle network (36) and two separate branches (84, 82) extending starting from the node (70, 78), a sub-set of the electrical components (10 to 32) being electrically connected to one of the branches (74, 82) and another sub-set of the electrical components (10 to 32) being electrically connected to the other of the branches (74, 82),
and **in that** the two branches (82) of the electrical wiring harness are electrically connected to one another at a second point (84) separate from the node (78) and form a loop, at least some of the electrical components (10 to 32) being electrically connected to the node (78) by the two branches (82).

2. Front or rear end according to claim 1, **characterised in that** the connection means (38) is an electrical connector having a male element (40) electrically connected to one of the wiring harness (34) of the end (4) and the vehicle network (36), and a female element (42) mating with the male element (40) and electrically connected to the other of the wiring harness (34) of the end (4) and the vehicle network (36).

3. Front or rear end according to claim 1, **characterised in that** the connection means (38) comprises means (52) for electrical monitoring of the end (4) capable, in the event of a defect of some of the electrical components (10 to 32) of the end (4), of identifying, from among the electrical components (10 to 32) of the end (4), the electrical components (10 to 32) which are detective and the electrical components (10 to 32) which are still operational.

4. Front or rear end according to claim 3, **characterised in that** the electrical monitoring means (52) comprise means (58) for identifying, for each defective electrical component (10 to 32), the type of defect.

5. Front or rear end according to claim 4, **characterised in that** the vehicle network (36) comprises a plurality of electronic checking units (46, 48) each arranged to have control over one or more of the electrical components (10 to 32) of the end (4), the monitoring means (52) comprising means (60) for informing, for each defective electrical component (10 to 32), the corresponding electronic checking unit (46, 48) of the type of defect identified for said electrical component (10 to 32).

6. Front or rear end according to claim 5 or 6, **characterised in that** the monitoring means (52) comprise means (62) for selective interruption of the electrical supply of each defective electrical component (10 to 32) as a function of, at least, the type of defect identified for said electrical component (10 to 32).

7. Front or rear end according to claim 6, **characterised in that** the means (62) for interruption of the electrical supply are arranged for selective interruption of the electrical supply of each defective electrical component (10 to 32) also as a function of a parameter which is representative of the state of the vehicle, said parameter indicating if the vehicle is in a state to be driven or not.

8. Front or rear end according to any one of claims 3 to 7, **characterised in that** the connection means (38) comprise analogue/digital conversion means (54) arranged to convert a digital signal received from the vehicle network (36) into an analogue signal transmitted to the wiring harness (34) of the end (4) and arranged to convert an analogue signal received from the wiring harness (34) of the end (4) into a digital signal transmitted to the vehicle network (36).

9. Front or rear end according to claim 8, **characterised in that** the connection means (38) comprise multiplexing/demultiplexing means (55) arranged to demultiplex a multiplexed digital signal received from the vehicle network (36) and to multiplex the digital signal transmitted to the vehicle network (36).

10. Front or rear end according to any one of the preceding claims, **characterised in that** the end (4) is a front end.

11. Front or rear end according to claim 10, **characterised in that** the end (4) comprises a rigid frame and at least one radiator rigidly fixed to the frame.

12. Front or rear end according to any ane of the preceding claims, **characterised in that** the wiring harness (34) is a wiring harness for electrical supply and control of the electrical components of the end (4).

## Patentansprüche

1. Kraftfahrzeug-Vorder (4)- oder -Hinterblock, wobei das Fahrzeug eine starre Struktur (2) und ein elektrisches Steuer und/oder Versorgungsnetz (36) umfasst, wobei der Block (4) dazu geeignet ist, auf die starre Struktur (2) vor oder hinter dem Fahrzeug aufgesetzt zu werden, wobei der Block (4) eine Gesamtheit von elektrischen Komponenten (10 bis 32), einen Kabelbaum (34) zur elektrischen Versorgung und/oder Steuerung der elektrischen Komponenten (10 bis 32) und mindestens ein Anschlussmittel (38), das dazu geeignet ist, den Kabelbaum (34) des Blocks (4) mit dem Netz (36) des Fahrzeugs zu verbinden, umfasst, wobei der Block (4) ein einmaliges Anschlussmittel (38) umfasst, das dazu geeignet ist, den Kabelbaum (34) des Blocks (4) mit dem Netz (36) des Fahrzeugs zu verbinden, wobei alle elektrischen Komponenten (10 bis 32) des Blocks (4) mit dem Anschlussmittel (38) über den Kabelbaum (34) elektrisch verbunden sind,
**dadurch gekennzeichnet, dass** der Kabelbaum (34) des Blocks (4) mindestens einen Knoten (70, 78), der mit Mittel (38) zum Abschließen an das Netz (36) des Fahrzeugs elektrisch verbunden ist und zwei unterschiedliche Äste (84, 82), die sich ausgehend von dem Knoten (70, 78) erstrecken, umfasst, wobei ein Teil der elektrischen Komponenten (10 bis 32) mit einem der Äste (74, 82) elektrisch verbunden ist und ein anderer Teil der elektrischen Komponenten (10 bis 32) mit dem anderen der Äste (74, 82) elektrisch verbunden ist, und
dadurch, dass die beiden Äste (82) des elektrischen Kabelbaums miteinander in einem von dem Knoten (78) unterschiedlichen zweiten Punkt (84) elektrisch verbunden sind und eine Schleife bilden wobei mindestens bestimmte der elektrischen Komponenten (10 bis 32) mit dem Knoten (78) über die zwei Äste elektrisch verbunden sind.

2. Vorder- oder Hinterblock nach Anspruch 1, **dadurch gekennzeichnet, dass** das Anschlussmittel (38) ein elektrischer Anschluss ist, umfassend ein männliches Element (40), das mit einem von Kabelbaum (34) des Blocks (4) oder Netz (36) des Fahrzeugs elektrisch verbunden ist, und ein weibliches Element (42), das mit dem männlichen Element (40) zusammenwirkt und elektrisch mit dem anderen von Kabelbaum (34) des Blocks (4) oder Netz (36) des Fahrzeugs verbunden ist.

3. Vorder- oder Hinterblock nach Anspruch 1, **dadurch gekennzeichnet, dass** das Anschlussmittel (38) Mittel (52) zur elektrischen Überwachung des Blocks (4) umfasst, die dazu geeignet sind, im Versagensfall von bestimmten der elektrischen Komponenten (10 bis 32) des Blocks (4) unter den elektrischen Komponenten (10 bis 32) des Blocks (4) die elektrischen Komponenten, die fehlerhaft sind und die elektrischen Komponenten (10 bis 32), die noch operationsfähig sind, zu identifizieren.

4. Vorder- oder Hinterblock nach Anspruch 3, **dadurch gekennzeichnet, dass** die elektrischen Mittel (62) zum Überwachen Mittel (58) umfassen, um für jede fehlerhafte elektrische Komponente (10 bis 32) einen Versagenstyp zu identifizieren.

5. Vorder- oder Hinterblock nach Anspruch 4, **dadurch gekennzeichnet, dass** das Netz (36) des Fahrzeugs eine Vielzahl von elektronischen Kontrolleinheiten (46, 48) umfasst, die jeweils dazu geeignet sind, eine oder mehrere der elektrischen Komponenten (10 bis 32) des Blocks (4) zu steuern, wobei die Überwachungsmittel (52) Mittel (60) umfassen, um für jede fehlerhafte elektrische Komponente (10 bis 32) die elektronische Kontrolleinheit (46, 48) zu informieren, die dem für die elektrische Komponente (10 bis 32) identifizierten Versagenstyp entspricht.

6. Vorder- oder Hinterblock nach Anspruch 5 oder 6, **dadurch gekennzeichnet, dass** die Überwachungsmittel (52) Mittel (62) zum selektiven Unterbrechen der elektrischen Versorgung von jeder fehlerhaften elektrischen Komponente (10 bis 32) in Funktion von mindestens dem für die elektrische Komponente (10 bis 32) identifizierten Versagenstyps umfassen.

7. Vorder- oder Hinterblock nach Anspruch 6, **dadurch gekennzeichnet, dass** die Mittel (62) zum Unterbrechen der elektrischen Versorgung dazu geeignet sind, die elektrische Versorgung von jeder fehlerhaften elektrischen Komponente (10 bis 32) auch in Funktion von einem für den Fahrzeugzustand repräsentativen Parameter zu unterbrechen, wobei der Parameter angibt, ob sich das Fahrzeug im fahrenden Zustand befindet oder nicht.

8. Vorder- oder Hinterblock nach einem der Ansprüche 3 bis 7, **dadurch gekennzeichnet, dass** die Anschlussmittel (38) Mittel (54) zur analogen/numerischen Umwandlung umfassen, die dazu geeignet sind, ein numerisches von Netz (36) des Fahrzeugs empfangenes Signal in ein analoges über den Kabelbaum (34) des Blocks (4) verteiltes Signal umzuwandeln, und die dazu geeignet sind, ein analoges von Kabelbaum (34) des Blocks (4) empfangenes Signal in ein numerisches über das Netz (36) des Fahrzeugs verteiltes Signal umzuwandeln.

9. Vorder- oder Hinterblock nach Anspruch 8, **dadurch gekennzeichnet, dass** die Anschlussmittel (38) Mittel (55) zum Multiplexen/Demultiplexen umfassen, die dazu geeignet sind, ein numerisches von Netz (36) des Fahrzeugs empfangenes Multiplex-Signal zu demultiplexen, und das numerische über das Netz (36) des Fahrzeug verteilte Signal zu multiplexen.

10. Vorder- oder Hinterblock nach einem der vorhergehenden Ansprüche, **dadurch gekennzeichnet, dass** der Blocks (4) ein Vorderblock ist.

11. Vorder- oder Hinterblock nach Anspruch 10, **dadurch gekennzeichnet, dass** des Blocks (4) einen starren Rahmen und mindestens einen an dem Rahmen starr fixierten Strahler umfasst.

12. Vorder- oder Hinterblock nach einem der vorhergehenden Ansprüche, **dadurch gekennzeichnet, dass** der Kabelbaum (34) ein elektrisches Kabel zum Versorgen und Steuern der elektrischen Komponenten des Blocks (4) ist.
